Europäisches Patentamt

European Patent Office

Office européen des brevets

(11) Publication number: **0 321 146**
**A2**

# EUROPEAN PATENT APPLICATION

(21) Application number: **88311622.0**

(22) Date of filing: **08.12.88**

(51) Int. Cl.⁴: **G01H 15/00**

(30) Priority: **15.12.87 US 133411**

(43) Date of publication of application:
**21.06.89 Bulletin 89/25**

(84) Designated Contracting States:
**DE ES FR GB IT NL SE**

(71) Applicant: **SIMMONDS PRECISION PRODUCTS INC.**
**150 White Plains Road**
**Tarrytown New York 10591(US)**

(72) Inventor: **Lichtenfels, Frederick Lloyd**
**RD NO. 2 Box 356-42**
**Vergennes Vermont 05491(US)**
Inventor: **Andresen, Richard P.**
**9 Bayfield Drive**
**Shelburne Vermont 05482(US)**

(74) Representative: **Foster, David Martyn et al**
**MATHISEN MACARA & CO. The Coach**
**House 6-8 Swakeleys Road**
**Ickenham Uxbridge UB10 8BZ(GB)**

(54) Apparatus and method for sensing acoustic reflections.

(57) An ultrasonic ice presence detector includes a transmit/receive piezoelectric sensor (10) coupled to one end of an acoustic delay line in the form of a rod (20) with the other end (26) of the rod co-aligned with the surface of an aerofoil (18). The transducer is excited by an electrical pulse to transmit an ultrasonic pulse along the rod to the sensing surface (26) as a function of the acoustic impedance at the sensing surface/air interface. When ice accumulates on the sensing surface, the acoustic impedance at the interface is altered to change the magnitude of the reflected energy. An acoustic discontinuity (30) of known characteristics is provided in the acoustic delay line (20) so that the magnitude of a first reflected pulse of known characteristics is sensed by the transducer and compared with the magnitude of a second, following pulse representative of the acoustic impedance at the sensing surface (26), thereby enabling self-calibration of the system during each cycle so that sensing is independent of various error sources in the system.

*Fig.I.*

# APPARATUS AND METHODS FOR SENSING ACOUSTIC REFLECTIONS

The present invention relates to apparatus and methods for sensing acoustic reflections. For example, the invention can be embodied in sensors for detecting the presence of ice and, more particularly, in sensors for detecting the presence of ice on aerofoil surfaces, including the wings and other aerodynamically active surfaces of aircraft and the like.

Various devices and systems have been developed using various technologies for sensing the presence or absence of ice on an aerofoil or other surface of an aircraft. In one system, a sensing surface is provided with a selected number of small diameter orifices thorugh which air is forced. When ice begins to form on the surface, one or more of the orifices is blocked and this indicates the presence of ice. In another system, a mechanical structure having known mechanical resonance characteristics, such as an elongated beam-like probe, is periodically subjected to an excitation signal thereby enabling the sensing of a change in resonant frequency that is a function of ice accumulation on the surface of the sensing structure.

In recent years, a wide variety of solid-state piezoelectric transducers have been developed and used in various applications in which an ultrasonic pulse is generated by the transducer and a reflected signal received to provide meaningful information. For example, such transducers have been used in range finding applications in which a pulse is transmitted to a target and the elapsed time from the transmission of the pulse to the sensing of the reflected energy pulse used to determine range information. Such ranging applications have included liquid-level sensing in fluid containing tanks, short-range altimeters, and auto-ranging in various types cameras. In general, piezoelectric transducers present a number of functional advantages in harsh environments since they operate reliably over a wide temperature range and have a high immunity to mechanical shock.

According to the invention, there is provided a method of sensing changes in the acoustic reflection characteristic of a surface to be monitored, comprising the steps of transmitting an acoustic interrogation pulse to the surface along an acoustic transmission medium, sensing the acoustic energy reflected from the surface, and producing a measurement signal representative thereof, characterised by the steps of determining from the said signal the reflection coefficient at the surface, and comparing the determined reflection coefficient with a predetermined value therefor whereby to indicate a change in the said characteristic of the surface when the determined value of the reflection coefficient diverges in a predetermined manner from a limit value thereof.

According to the invention, there is also provided a method of sensing the presence or absence of ice on a surface, characterised by the steps of transmitting an acoustic interrogation pulse along an acoustic transmission medium to the surface, sensing the acoustic energy reflected from the surface, producing a measurement signal representative of such reflected energy, and indicating the presence or absence of ice on the surface in dependence on the magnitude of the measurement signal.

According to the invention, there is further provided apparatus for sensing changes in the acoustic reflection characteristics of a surface to be monitored and for carrying out either of the foregoing methods, comprising acoustic transducing means for producing an acoustic interrogation pulse, an acoustic transmission medium for receiving the acoustic interrogation pulse and transmitting it to the said surface, and acoustic energy responsive means responsive to the acoustic energy reflected from the surface to produce a measurement signal representative thereof, characterised by means responsive to the measurement signal for comparing its magnitude with a predetermined limit value and thereby sensing changes in the acoustic reflection characteristic of the surface.

According to the invention, there is still further provided apparatus for sensing for the presence or absence of ice on a surface and for carrying out either of the preceding methods, characterised by transducing means for producing an acoustic interrogation pulse, an acoustic transmission medium for transmitting the acoustic interrogation pulse to the surface, acoustic energy responsive means responsive to the acoustic energy reflected by the surface and returned along the acoustic transmission medium for producing a measurement pulse representative of such energy, and measuring means responsive to the magnitude of the measurement signal to determine the presence or absence of ice on the surface.

Ice detection systems sensors and methods according to the present invention will now be described, by way of example only, with reference to the accompanying drawings, in which:

FIG. 1 is a cross-sectional view of one of the ice presence sensors installed in an exemplary application;

FIG. 2 is a cross-sectional view of the ice presence sensor of FIG. 1;

FIG. 3 is a schematic representation of an acoustic transmission line portion of an acoustic transducer;

FIG. 4 is an idealized graphical representation of return signal pulses representative of energy returned from a reference reflector surface and a sensing surface;

FIG. 5 is a functional block diagram of a control circuit for operating the sensor;

FIG.6 is a functional block diagram of another control circuit for operating a plurality of the sensors; and

FIG. 7 is an exemplary representation of three acoustic transmission line portions of an acoustic transducer of different lengths and having differently shaped sensing surfaces.

In a preferred embodiment to be described in detail below, a transmit/receive piezoelectric transducer is coupled to one end of a rod-like acoustic delay line with the other end of the rod co-aligned with the surface of an aerofoil. The transducer is excited by an electrical pulse to transmit an ultrasonic pulse along the rod to the sensing surface. A portion of the transmitted pulse is reflected at the sensing surface as a function of the acoustic impedance at the sensing surface/air interface. When ice accumulates on the sensing surface, the acoustic impedance at the interface changes to change the magnitude of the reflected energy. A known acoustic discontinuity is provided in the acoustic delay line represented by the rod so that the magnitude of a first reflected pulse of known characteristics is sensed by the transducer and compared with the magnitude of a second, following pulse representative of the acoustic impedance at the sensing surface. The provision of such known acoustic discontinuity allows the system to self-reference or self-calibrate during each cycle so that sensing is independent of scaling factors present in the electronics which drive the transducer and long-term changes in the response characteristics of the various components.

In a system context, a plurality of transducers can be provided at different sensing sites and operated in a successive serial manner through a multiplexer to provide a recurring series of information signals representative of the ice/no ice condition in a manner to be described. Alternatively, the acoustic delay line associated with each transducer can be of a different length to provide a time delay unique to that sensor. The transducers are excited simultaneously with the return information signals for each transducer associated with a unique time delay from the moment of excitation.

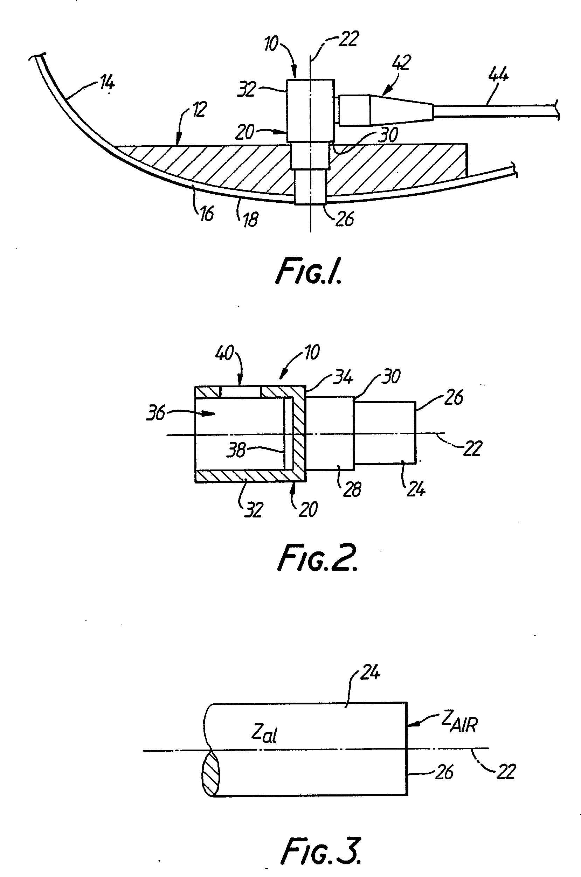

The ice detection sensor system is shown in an exemplary application in FIG. 1 and, as shown, includes a sensor 10 mounted in a support block 12 that is positioned against the interior surface 14 of wall section 16 that defines, in an aircraft environment, an exposed aerofoil surface 18, such as the surface of a wing or the air entry surface of an engine nacelle. The support block 12 can be formed from a moulded plastic, for example, with the sensor 10 and a sensor-accepting bore provided with complementary threads (not shown). As shown in the cross-sectional view of FIG. 2, the sensor 10 is defined as a body member 20 formed about a longitudinal axis 22 and can be fabricated from various materials including metals, ceramics, plastics, and metal-plated plastics. In general, the material should have good thermal, erosion, and ageing characteristics and an acoustic impedance that maximizes the change in the information signals. In one form of the sensor 10, the body member 20 is fabricated from machinable MACOR ceramic. The body member 20 is formed with a stepped cylindrical portion which functions, as described below, as an acoustical transmission line with known propagation characteristics, and includes a distal section 24 having an end surface at its remote end which functions as a sensing surface 26, an intermediate section 28 which joins with the distal section 24 at an annular shoulder which functions as a reference surface 30, and a rear section 32 which joins with the intermediate section 28 at an annular shoulder 34. The rear section 32 is formed with a counterbore 36 with a discoidal piezoelectric transducer 38 secured to the bottom wall of the counterbore 36 with a suitable cement. As shown in FIG. 1, the sensing surface 26 is positioned in a substantially co-planar relationship with the exposed surface 18 of the wall section 16. While the sensing surface 26 is shown as essentially planar, as explained below the sensing surface 26 can be non-planar so as to conform to the shape of the immediately adjacent surface.

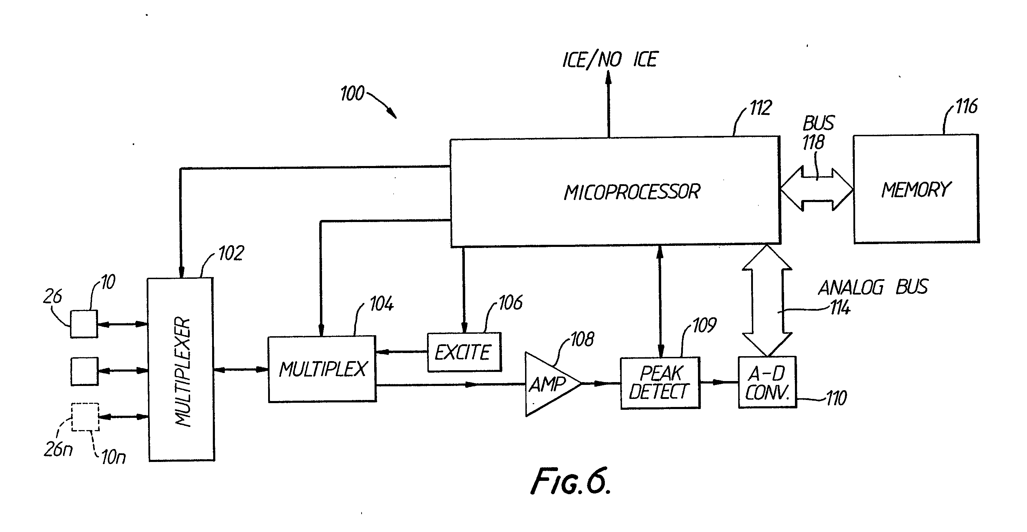

The piezoelectric transducer 38 is of conventional design and produces an acoustic output pulse in response to an electrical drive signal, and, conversely, produces an electrical output signal when acoustically stimulated. The piezoelectric transducer 38 includes electrodes (not shown) formed on its opposite faces for connection to appropriate conductors (not shown) which pass through an opening 40 to a connector 42 and a cable 44 (FIG. 1). The piezoelectric transducer 38 is connected to and controlled by a controller circuit, described more fully below in connection with FIGS. 5 and 6. The counterbore 36 rearwardly of the piezoelectric transducer 38 is preferably backfilled with an appropriate 'potting' material, such as various types of epoxies and silicones.

The piezoelectric transducer 38 is operated by a drive signal, as explained more fully below, to produce an acoustic pulse at a selected frequency (e.g., 15 MHz) with the pulse coupled to and transmitted along the body member 20 toward and to the remote sensing surface 26. Depending upon the acoustic impedance present at the interface between the sensing surface 26 and the surrounding medium, e.g., air, a portion of the transmitted pulse will be reflected from the sensing surface 26 rearwardly to the piezoelectric transducer 38 which, in turn, will produce an electrical output representative of the reflected energy. Any changes in the acoustic impedance at the interface, caused by accumulated ice, for example, will change the nature, principally the magnitude, of the reflected energy.

As represented in schematic fashion in FIG. 3, an aluminium acoustic transmission line, as represented by the distal section 24, has an acoustic impedance $Z_{al}$ which is the product of the speed of sound in the material and the density of the material. Where the acoustic impedance of the materials at the interface between the sensing surface 26 and the surrounding environment is known, i.e., aluminium and air, the reflection coefficient R is the ratio of the reflected signal to the transducer-transmitted signal as follows:
$$R = (Z_{air} - Z_{al})/(Z_{air} + Z_{al}) \qquad (1)$$
where $Z_{al}$ 17.1 x $10^5$ gm/cm²sec and $Z_{air}$ = 41.6 gm/cm²sec. Since $Z_{al}$ is very much greater than $Z_{air}$, then R = $-Z_{al}/Z_{al}$ = -1

For air at the sensing surface 26, the reflection coefficient R can thus be considered as unity in magnitude.

When ice, which has an acoustic impedance $Z_{ice}$ = 3.0 x $10^5$ gm/cm²sec, is present, the magnitude of the reflection coefficient R drops to 0.7 from unity in dependence on an increase in the acoustic coupling from the sensing surface 26 to the ice and the reduced energy available for reflection. For thin ice thickness, of the order of a wavelength, the reflection coefficient R also depends on the ice thickness-to-wavelength ratio. The reflection coefficient R passes through a minimum at ice thicknesses of one-quarter wavelength thickness and a relative maximum at ice thicknesses of one-half wavelength so that arbitrary thickness thresholds can be chosen by selecting the wavelength of the interrogation energy. In one embodiment, a 15 MHz interrogation frequency (having a wavelength in ice of 0.254mm or 0.010 inches) provided good sensitivity for ice thicknesses of up to 0.127mm or 0.005 inches.

One advantage of the system described is its inherent insensitivity to liquid water and its ability to distinguish between liquid water and ice because of the substantial difference in impedance Z between water and ice. Water has an impedance $Z_{water}$ of 1.48 x $10^5$ gm/cm²sec, about one-half that of ice, to produce a reflection coefficient R of 0.84 at an aluminium/water interface as contrasted with a value R of 0.7 for an aluminium/ice interface.

In order to prevent errors in the determination of the reflection coefficient R consequent upon normal variations in input/output characteristics of the below-described electronic controllers of FIGS. 5 and 6, variations in the transducer performance with temperature and age, etc., the system being described provides for a reference surface 30 in the form of the annular shoulder between the distal section 24 and the intermediate section 28. The reference surface 30 serves as a reflector to return a portion of the interrogation energy transmitted by the piezoelectric transducer 38. Since the interface at the reference surface 30 is constant relative to changes in impedance at the sensing surface 26 interface, energy reflected from the reference surface 30 can be used, as described below, to normalize the energy returned from the sensing surface 26 and compensate for a number of possible error sources. The provision of a reference surface 30 allows for the quantitative evaluation of the energy returned from the sensing surface 26 in such a way as to compensate for the normal range of variation in the interrogation pulse transmitted by the piezoelectric transducer 38 including compensation for the variations in the input/output characteristics of the below-described electronic controller, variations in the transducer performance with temperature, age, etc. In general, the acoustic discontinuity presented by the reference surface 30 should provide a return signal of the same order of magnitude as the signal returned from the sensing surface 26. In the context of the embodiment presented in FIGS. 1 and 2, a reference surface 30 having a surface area approximately the same as that of the sensing surface 26 is suitable. The reference surface 30 need not be in the form of an annular surface area between cylindrical sections of different diameter as shown and can be formed, for example, by a peripheral slot formed in a plane transverse to the long axis to define an acoustic discontinuity sufficient to return energy to the transducer 38 to provide a useable reference signal. In addition, an interior cavity (not shown) can be used to provide the desired reflected energy.

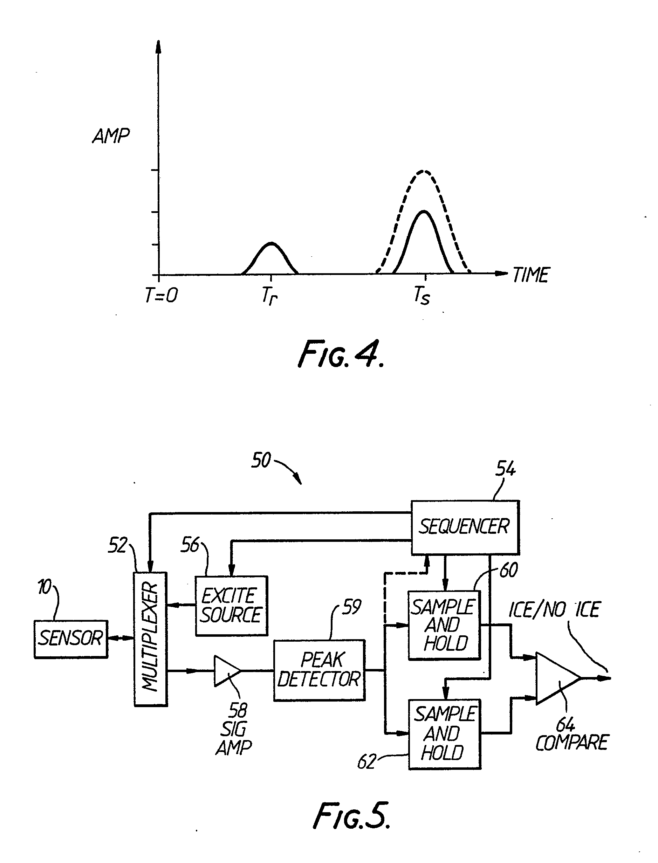

In operation, the transducer 38 is excited with a drive pulse that ends at time T = 0, and, as shown in the idealized graphical representation of FIG. 4, a first return pulse is detected at time T = $T_r$ from the reference surface 30 and a second, following, return pulse is detected at time T = $T_s$ from the sensing surface 26 of the sensor 10 with the time between pulses dependent upon the physical separation of the two surfaces. The amplitude of the reference pulse at time T = $T_r$ is a function, in part, of the acoustic impedance at the reference surface 30 and will remain relatively constant. The amplitude of the pulse at time $T = T_s$ returned from the sensing surface 26 is a function of the acoustic impedance at the sensing surface 26 and will be of a first, higher amplitude (dotted-line illustration) for an air interface and a discernibly lower, second amplitude (solid-line illustration) for the presence of ice at the interface. In order to determine the reflection coefficient R, the amplitude of the returned sense pulse is divided by the amplitude of the returned reference pulse to provide a normalized value that will allow reliable discrimination between the presence of ice and the presence of air at the sensing surface 26.

A suitable control circuit for the sensor 10 is shown in schematic form in FIG. 5 and designated generally therein by the reference character 50. As shown, the sensor 10 is connected to a multiplexer 52 which functions under the control of a sequencer 54 to connect the sensor 10 to an excitation source 56 or to a return signal amplifier 58. The excitation source 56 is also under the control of the sequencer 54 and functions to provide an electrical excitation pulse to the sensor 10 to provide the acoustic signal as described below. The output of the return signal amplifier 58 is provided to a peak detector 59 which is connected to two sample-and-hold circuits 60 and 62, which are also under the control of the sequencer 54. A comparator 64 compares the outputs of the sample-and-hold circuits 60 and 62, which are, respectively, values corresponding to the peak values of the reference pulse and the pulse returned from the sensing surface 26, as described above in connection with FIG. 4, and provides a 'no ice' indication when the difference between the outputs of the two sample-and-hold circuits 60 and 62 is above a predetermined value and an 'ice' indication when the difference is below the predetermined value.

In operation, the sequencer 54 controls the multiplexer 52 to connect the excitation source 56 to the sensor 10 and controls the excitation source 56 to drive the sensor 10 to produce the acoustic energy which is transmitted toward the sensing surface 26. Thereafter, the sequencer 54 controls the multiplexer 52 to disconnect the excitation source 56 and connect the sensor 10 to the return signal amplifier 58 with one of the sample-and-hold circuits 60 and 62 operated to sample the magnitude of the first reflected pulse from the reference surface 30 and the second of the sample-and-hold circuits 60 and 62 operated to sample the magnitude of the following reflected pulse returned from the sensing surface 26. While the sequencer 54 can be programmed to gate the sample-and-hold circuits 60 and 62 in a predetermined time relationship, a sense path (as represented in dotted line) can be provided from the output of the return signal amplifier 58 to the sequencer 54 to allow gating to be controlled by the reception of the first reflected pulse. The output of the sample-and-hold circuits 60 and 62 is provided to the threshold comparator 64 which provides a 'no ice' indication when the difference between the outputs of the two sample-and-hold circuits 60 and 62 is above a predetermined value and an 'ice' indication when the difference is below the predetermined value.

Another control system for operating a plurality of transducers 10, for example a plurality of N transducers 10 positioned at various locations on the wing surfaces of an aircraft, is shown in FIG. 6 and designated generally therein by the reference character 100. As shown, a plurality of N transducers 10 $10_n$ are connected to a 1-of-N multiplexer 102 which is controlled, as explained below, to connect the various transducers 10 ... $10_n$ to another multiplexer 104 which is controlled to connect an excitation source 106 to the selected sensor 10 or to connect the selected sensor 10 to a return signal amplifier 108. A 'peak' value detector 109 is connected to the output of the return signal amplifier 108 and functions to provide an indication of the peak value of the output of the return signal amplifier 108 to an analog-to-digital converter 110 which provides a digital representation of the output of the selected sensor 10 for subsequent signal processing. A microprocessor 112 operates to provide the appropriate select signals to the multiplexers 102 and 104 and command signal to the excitation source 106 and to accept the digital output of the analog-to-digital converter 110 along bus 114. A memory 116 is connected to the microprocessor 112 through a bus 118 and serves to store values representative of the various reference and sensor surface signals from each of the sensors 10 ... $10_n$. The microprocessor 112 is of conventional organization and includes I/O and data ports, a read-only memory (ROM) containing a stored control program which implements the sequence described below, a random-access memory (RAM) for storing values assigned to variables; an arithmetic-logic unit (ALU); one or more storage registers Reg. A, Reg. B, Reg. C..., for manipulating data; and a clock CLK.

The control system 100 operates in response to a stored control program which provides a selected signal to the multiplexer 102 to cause it to select a particular one of the transducers 10 to feed a select signal to the multiplexer 104 to couple the excitation source 106 to the selected sensor 10, and to feed a command signal to the excitation source 106 to generate the acoustic pulse for transmission to the sensing surface 26. Thereafter, the microprocessor 112 controls the multiplexer 104 to disconnect the excitation source 106 and connect the sensor 10 output to the return signal amplifier 108. The analog-to-digital converter 110 converts the peak value of the return signal from the reference surface 30 (FIG. 2) to digital values of appropriate bit-width (e.g., 16 bits) and provides the values to the microprocessor 112 via the bus 114 for storage in the memory 116. Thereafter, the peak value of the following pulse, representative of the energy returned from the sensing surface 26 of the selected sensor 10, is similarly digitized and stored in an appropriate location. The microprocessor 112 then divides the peak value of the one pulse by the peak value of the other to determine a ratio value which is representative of the reflection coefficient R at the sensing surface 26. The microprocessor 112 then sequentially interrogates the remaining sensors 100 until each has provided a respective reflection coefficient R. The ice/no ice output is then provided when a predetermined number of sensors 10, for example, a simple majority, indicate the presence of ice by providing a reflection coefficient R below a threshold value. In addition to providing the transducer excitation signal through the multiplexers 102 and 104, each sensor 10 can be provided with its own excitation source (not specifically shown) in the form of a capacitive discharge circuit which is triggered or otherwise controlled via the multiplexer 102.

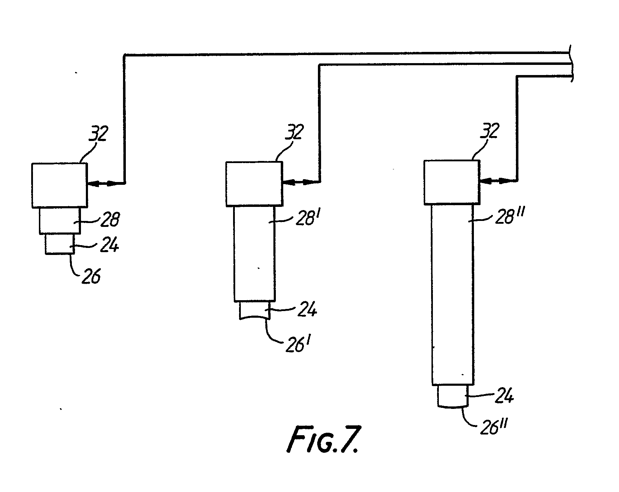

In addition to using a multiplexed or switched operating environment to excite and obtain information from a plurality of sensors 10, a time-multiplexed arrangement can be used. For example and as shown in FIG. 7, the intermediate section 28 for the three sensors shown is formed with different respective lengths, as represented by sections 28, 28', and 28'', to define sensors having different acoustic delays. The various sensors are excited simultaneously with the return reference surface 30 and sensor surface 26 signals for each sensor occurring in a unique time relationship relative to the other sensors as function of the various acoustic delays.

In the information processing systems of FIGS. 5 and 6, the peak value of the reference and sensing surfaces pulses is used to effect the determination of the reflection coefficient R. As can be appreciated, other values are suitable including an integrated value representative of the entire returned pulses above a selected amplitude threshold or a time 'windowed' value representative of returned pulses between start and stop times which bracket the occurrence of the peak value.

In the preferred embodiment of the sensor 10 described above and as represented by the sensing surface 26 in FIGS. 1-3, each sensing surface has been presented as a planar surface at the end of a cylinder. As can be appreciated, the sensing surface can be non-circular and can be formed as a non-planar surface, for example, as a concave surface as represented by the sensing surface 26'

in FIG. 7, or a convex surface as represented by the sensing surface 26'', to conform to the local surface configuration of the aerodynamically active aerofoil. Although embodiments described are intended for the detection of ice on aerofoil surfaces of aircraft, other embodiments can be used in any other application in which ice detection is required.

The embodiments described advantageously provide an ice presence detector system which is relatively simple in design with a self-referencing performance characteristic which minimizes error sources to provide a functionally reliable system.

It will be apparent and is contemplated that modification and/or changes may be made in the illustrated embodiment without departure from the invention as claimed. Accordingly, it is expressly intended that the foregoing description and accompanying drawings are illustrative of preferred embodiments only, not limiting, and that the true spirit and scope of the present invention will be determined by reference to the appended claims and their legal equivalent.

## Claims

1. A method of sensing changes in the acoustic reflection characteristic of a surface (26) to be monitored, comprising the steps of transmitting an acoustic interrogation pulse to the surface (26) along an acoustic transmission medium (20), sensing the acoustic energy reflected from the surface (26), and producing a measurement signal (Ts) representative thereof, characterised by the steps of determining from the said signal (Ts) the reflection coefficient at the surface (20), and comparing the determined reflection coefficient (R) with a predetermined value therefor whereby to indicate a change in the said characteristic of the surface (26) when the determined value of the reflection coefficient (R) diverges in a predetermined manner from a limit value thereof.

2. A method of sensing the presence or absence of ice on a surface, characterised by the steps of transmitting an acoustic interrogation pulse along an acoustic transmission medium (20) to the surface (26), sensing the acoustic energy reflected from the surface (26), producing a measurement signal (Ts) representative of such reflected energy, and indicating the presence or absence of ice on the surface (26) in dependence on the magnitude of the measurement signal.

3. A method according to claim 1 or 2, characterised by the step of providing an acoustic discontinuity (30) in the acoustic transmission medium (20), sensing the acoustic energy reflected from the acoustic discontinuity (30) in response to the transmitted acoustic interrogation pulse, producing a calibration signal (Tr) in dependence on the latter reflected acoustic energy, and using the calibration signal (Tr) to normalize the measurement signal (Ts).

4. A method according to claim 3, characterised in that the normalizing step comprises the step of calculating the ratio between the measurement signal (Ts) and the calibration signal (Tr).

5. Apparatus for sensing changes in the acoustic reflection characteristics of a surface (26) to be monitored and for carrying out a method according to any preceding claim, comprising acoustic transducing means (38) for producing an acoustic interrogation pulse, an acoustic transmission medium (20) for receiving the acoustic interrogation pulse and transmitting it to the said surface (26), and acoustic energy responsive means responsive to the acoustic energy reflected from the surface (26) to produce a measurement signal (Ts) representative thereof, characterised by means (54, 60, 62; 108, 109, 110, 112) responsive to the measurement signal for comparing its magnitude with a predetermined limit value and thereby sensing changes in the acoustic reflection characteristic of the surface (26).

6. Apparatus for sensing for the presence or absence of ice on a surface (26) and for carrying out the method of any one of claims 1 to 4, characterised by transducing means (38) for producing an acoustic interrogation pulse, an acoustic transmission medium (20) for transmitting the acoustic interrogation pulse to the surface (26), acoustic energy responsive means (38) responsive to the acoustic energy reflected by the surface (26) and returned along the acoustic transmission medium (20) for producing a measurement pulse (Ts) representative of such energy, and measuring means (60, 62, 64; 108, 109, 110, 112) responsive to the magnitude of the measurement signal (Ts) to determine the presence or absence of ice on the surface (26).

7. Apparatus according to claim 5 or 6, characterised by means (30) for normalizing the measurement signal.

8. Apparatus according to claim 7, characterised in that the normalizing means (30) comprises a predetermined discontinuity (30) in the acoustic transmission medium which receives the acoustic interrogation pulse and reflects acoustic energy therefrom to the acoustic energy responsive means (38) along the acoustic transmission medium (20), calibration means (60; 108, 109, 110, 112) for producing a calibration signal (Tr) dependent on this reflected acoustic energy, and means (64; 112) for measuring the ratio of the measurement and calibration signals.

9. Apparatus according to any one of claims 5 to 8, characterised by a piezoelectric transducer (38) constituting both the transducing means and the acoustic energy responsive means.

10. Apparatus according to any one of claims 5 to 9, characterised in that the acoustic transmission medium comprises a solid acoustic transmission line (20) of predetermined length having the acoustic transducing means (38) at an input end thereof and the surface (26) at the opposite end thereof.

11. Apparatus according to both claim 7 and claim 10, characterised in that the acoustic transmission line comprises an elongated rod having a first dimension portion (28) and a second dimension portion (24) in end to end relationship so as to define the said acoustic discontinuity (30) between them.

12. Apparatus according to claim 11, characterised in that the first dimension is greater than the second dimension.

13. Apparatus according to any one of claims 5 to 12, characterised by second acoustic transducing means (38) for producing a second acoustic interrogation pulse, a second acoustic transmission medium (20) for transmitting the second acoustic interrogation pulse to a second said surface (26), second acoustic energy responsive means (38) for receiving acoustic energy reflected by the second surface (26) in response to the second acoustic interrogation pulse and producing a second measurement signal (Ts) in dependence thereof, and multiplexing means (54; 112; 28, 28$'$, 28$''$) for causing the two said measurement signals to be produced sequentially.

14. Apparatus according to claim 13, characterised in that the said multiplexing means comprises sequencing means (54; 112) for sequentially energizing the two acoustic transducing means (38).

15. Apparatus according to claim 13, characterised in that the multiplexing means comprises means (28, 28$'$, 28$''$) for producing different acoustic time delays in the two acoustic transmission media (20).

16. Apparatus according to any one of claims 5 to 15, characterised in that the or each said surface is flat (26), concave (26$'$) or convex (26$''$).

Fig.I.

Fig.2.

Fig.3.

FIG. 4.

FIG. 5.

Fig.6.

FIG.7.